# EUROPÄISCHE PATENTSCHRIFT

(11) **EP 2 948 733 B1**
(45) Veröffentlichungstag und Bekanntmachung des Hinweises auf die Patenterteilung: **31.10.2018**
(21) Anmeldenummer: 13807960.3
(22) Anmeldetag: 09.12.2013
(51) Int. Cl.: G01B 11/16

(54) **VERFAHREN UND VORRICHTUNG ZUR FAHRZEUGVERMESSUNG**
METHOD AND DEVICE FOR VEHICLE MEASUREMENT
PROCÉDÉ ET DISPOSITIF DESTINÉS À DÉTERMINER LA GÉOMÉTRIE D'UN VÉHICULE

(30) Priorität: 22.01.2013 DE 102013200910
(43) Veröffentlichungstag der Anmeldung: 02.12.2015
(73) Patentinhaber: Robert Bosch GmbH, 70442 Stuttgart (DE)
(72) Erfinder: WAGMANN, Christian, 80538 München (DE); GRAF, Simone, 80992 München (DE)
(86) Internationale Anmeldenummer: PCT/EP2013/075897
(87) Internationale Veröffentlichungsnummer: WO 2014/114402

(56) Entgegenhaltungen:
- WO-A1-01/23834
- DE-A1-102006 048 725
- JP-A- 2011 027 509
- US-A- 4 724 704
- US-A1- 2006 126 966

## Beschreibung

Die Erfindung betrifft ein Verfahren und eine Vorrichtung zum Überprüfen der korrekten Positionierung eines Fahrzeugs auf einem Messplatz zur Fahrzeugvermessung.

### Stand der Technik

Bei der Fahrzeugvermessung spielen die Ebenheit des Messplatzes und eine exakt horizontale Ausrichtung des Fahrzeugs eine große Rolle, um bei der Vermessung genaue Ergebnisse erzielen zu können. So geben die Hersteller beispielsweise vor, dass die maximale Höhendifferenz zwischen den Radaufstandsflächen nicht mehr als 1 mm betragen darf.

Zudem sind gleiche Luftdrücke, zumindest in den Rädern einer Achse, erforderlich, um eine Schiefstellung der Karosserie aufgrund einer unterschiedlichen Komprimierung der Reifen zu vermeiden.

Um zuverlässig richtige Messergebnisse zu erhalten, ist es daher erforderlich, sowohl die Ebenheit und die horizontale Ausrichtung des Messplatzes als auch den Luftdruck in den Rädern des zu vermessenden Fahrzeugs vor jeder Messung zu überprüfen.

Diese Überprüfung ist zeitaufwendig, so dass die Gefahr besteht, dass aus Bequemlichkeit auf die notwendigen Kontrollen verzichtet und die Fahrzeugvermessung in der Folge fehlerhaft durchgeführt wird.

Aus der WO 01/23834 A1 ist bekannt, dass Bilder von Fahrzeugreifen aufgenommen werden und daraus der Rollradius der Reifen bestimmt wird.

### Offenbarung der Erfindung

Es ist daher eine Aufgabe der Erfindung, die Durchführung der notwendigen Kontrollen zu vereinfachen und weitestgehend zu automatisieren.

Ein erfindungsgemäßes Verfahren zum Überprüfen der korrekten Positionierung eines Fahrzeugs auf einem Messplatz zur Fahrzeugvermessung, insbesondere zum Überprüfen einer korrekten horizontalen Ausrichtung des Fahrzeugs, umfasst die Schritte des Aufnehmens von Bildern von wenigstens zwei Reifen des Fahrzeugs; des Identifizierens von Merkmalen in den aufgenommenen Bildern, die wenigstens einen Bereich des jeweils aufgenommenen Reifens beschreiben; des Approximierens eines mathematischen Models an die identifizierten Merkmale des Reifens; des Bestimmens des Ausmaßes der Abplattung jedes Reifens aus dem approximierten mathematischen Modell; und des Vergleichens der Abplattung der wenigstens zwei Reifen.

Die identifizierten Merkmale beschreiben dabei insbesondere denjenigen Bereich des Reifens, in dem eine Abplattung auftritt, insbesondere also einen um die Aufstandsfläche des Reifens angeordneten Bereich.

Eine erfindungsgemäße Vorrichtung zum Überprüfen der korrekten Positionierung eines Fahrzeugs auf einem Messplatz zur Fahrzeugvermessung, insbesondere zum Überprüfen einer korrekten horizontalen Ausrichtung des Fahrzeugs, mit wenigstens zwei Messwertaufnehmern, die jeweils ausgebildet sind, Bilder eines Reifens des Fahrzeugs aufzunehmen, hat eine Auswertvorrichtung, die ausgebildet ist, Merkmale in den aufgenommenen Bildern zu identifizieren, die wenigstens einen Bereich des jeweils aufgenommenen Reifens beschreiben; ein mathematisches Modell an die identifizierten Merkmale zu approximieren; das Ausmaß der Abplattung jedes Reifens aus dem approximierten mathematischen Modell zu bestimmen; und die Abplattung von wenigstens zwei Reifen miteinander zu vergleichen.

Mit einer erfindungsgemäßen Vorrichtung gemäß Anspruch 7 und einem erfindungsgemäßen Verfahren gemäß Anspruch 1 kann die ordnungsgemäße horizontale Ausrichtung des zu vermessenden Kraftfahrzeugs einfach und bequem und insbesondere automatisiert überprüft werden. Insbesondere kann eine erfindungsgemäße Überprüfung durch ein Software-Update einer vorhandenen Vermessungsvorrichtung eingerichtet werden, ohne dass zusätzliche Hardware installiert werden muss. Die erfindungsgemäße Überprüfung kann daher kostengünstig sowohl in neuen als auch in bereits bestehenden Messplätzen implementiert werden.

Insbesondere kann die Auswertvorrichtung in einen der Messwertaufnehmer, die zur Fahrzeugvermessung verwendet werden, integriert sein.

Die Vorrichtung kann vier oder mehr Messwertaufnehmer aufweisen, um alle Räder des Fahrzeugs gleichzeitig erfassen zu können.

Das Verfahren kann zusätzlich den Schritt aufweisen, eine Warnung auszugeben und/oder eine geplante Fahrzeugvermessung zu blockieren, wenn die Differenz in der Abplattung der Reifen einen vorgegebenen Grenzwert überschreitet.

Jeder Reifen bzw. wenigstens ein Teilbereich des Reifens kann jeweils von einem Projektor, der als Licht- oder Laserprojektor ausgebildet sein kann, beleuchtet werden, um eine strukturierte Bildaufnahme des Reifens bzw. eines Teilbereiches zu ermöglichen.

Die Bilder der Reifen können mit einer Stereokamera als Stereo-Bilder aufgenommen werden, um auch dreidimensionale Informationen berücksichtigen zu können.

Das mathematische Modell, das an die aufgenommenen Bilder angepasst wird, kann insbesondere ein zwei- oder dreidimensionales mathematisches Modell, beispielsweise ein rotationssymmetrisches Polynom-Modell oder ein Spline-Modell sein. Derartige Modelle haben sich als besonders gut geeignet erwiesen, um mit vertretbarem Rechenaufwand ein hinreichend genaues mathematisches Modell der Reifen zu erzeugen.

Das Verfahren kann zusätzlich umfassen, während einer Vorbeifahrt des Fahrzeugs mehrere Bilder jedes Rades aufzunehmen; aus dem mathematischen Modell die Drehzentren der Räder zu bestimmen; und zu überprüfen, ob sich die Räder während der Vorbeifahrt in einer Ebene bewegt haben.

Auf diese Weise können Schiefstände des Fahrzeugs, die sich aus unterschiedlichen Luftdrücken in den Reifen ergeben, auch Unebenheiten des Messplatzes zuverlässig erkannt werden, so dass eine manuelle Überprüfung des Messplatzes nicht mehr erforderlich ist.

Falls der Messwertaufnehmer mit einer Schwerkraftsensor ausgestattet ist, der es ermöglicht, die Ausrichtung des Messwertaufnehmers im Schwerkraftfeld der Erde zu bestimmen, kann zusätzlich auch die Ausrichtung der Ebene des Messplatzes im Schwerkraftfeld der Erde bestimmt werden.

### Kurze Beschreibung der Figuren

Die Erfindung wird im Folgenden anhand der beigefügten Figuren näher erläutert. Dabei zeigt:
Figur 1 eine schematische Draufsicht auf einen Messplatz zur Fahrzeugvermessung;
Figur 2 ein Beispiel für eine 3D-Punktwolke, die von einem Messwertaufnehmer aufgenommen worden ist, der neben einem linken Vorderrad eines Kraftfahrzeugs angeordnet ist;

### Figurenbeschreibung

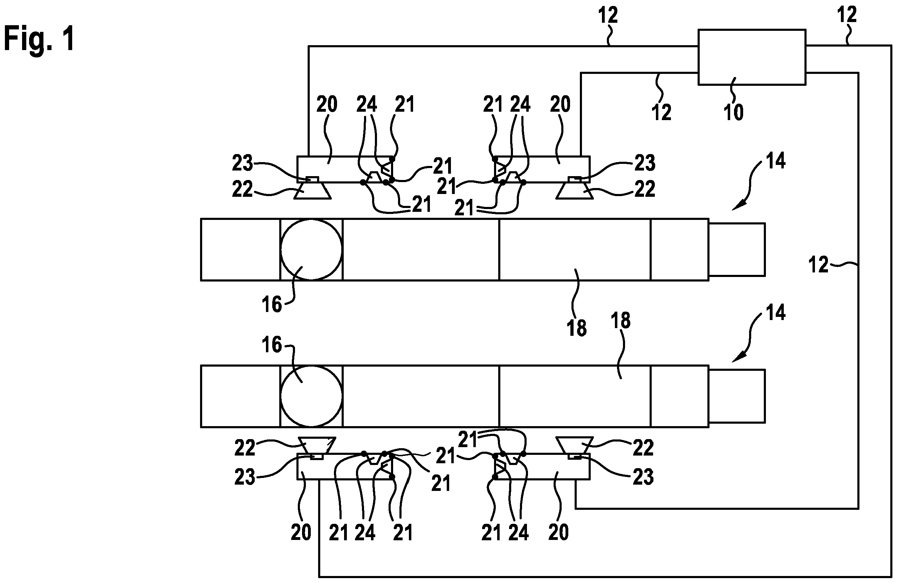

Figur 1 zeigt eine schematische Draufsicht auf einen Messplatz zur Fahrzeugvermessung.

Der Messplatz weist zwei parallel zueinander angeordnete Fahrschienen 14 auf, die beispielsweise die Fahrschienen 14 einer Hebebühne sein können. Die Fahrschienen 14 können aber auch fest am Boden des Messplatzes installiert sein. Alternativ kann das Verfahren auch ohne Fahrschienen 14 auf dem Boden des Messplatzes durchgeführt werden.

In einem in der Figur 1 links dargestellten Bereich ist jede der beiden Fahrschienen 14 mit einer Drehplatte 16 ausgestattet, die es ermöglicht, die lenkbaren Räder eines auf den Fahrschienen 14 angeordneten Fahrzeugs einzulenken, wenn das Fahrzeug so auf den Fahrschienen 14 angeordnet ist, dass seine lenkbaren Räder auf den Drehplatten 16 abgestützt sind.

In einem in der Figur 1 auf der rechten Seite dargestellten Bereich weisen die Fahrschienen 14 jeweils eine Schiebeplatte 18 auf. Die Schiebeplatten 18 sind parallel zur Längserstreckung der Fahrschienen 14 verschiebbar und können so in einem variablen Abstand von der zugehörigen Drehplatte 16 angeordnet werden. Auf diese Weise kann der Messplatz an verschiedene Fahrzeuge, die unterschiedliche Abstände zwischen den Vorderrädern und den Hinterrädern haben, angepasst werden.

Um die Fahrschienen 14 sind in einer rechteckigen Anordnung vier Messwertaufnehmer 20 angeordnet. Zwei (vordere) Messwertaufnehmer 20 sind auf Höhe der Drehplatten 16 und damit neben den üblicherweise lenkbaren Vorderrädern eines auf den Fahrschienen 14 abgestellten Fahrzeugs angeordnet. Zwei (hintere) Messwertaufnehmer 20 können entlang der Fahrschienen 14 bewegt werden, so dass ihre Position derart an den Achsabstand des zu vermessenden Fahrzeugs angepasst werden kann, dass die hinteren Messwertaufnehmer 20 stets den Hinterrädern des auf den Fahrschienen 14 abgestellten Fahrzeugs gegenüberliegend positioniert sind.

Jeder der Messwertaufnehmer 20 weist eine Bildaufnahmevorrichtung (Bildsensor) 22 zur Messwerterfassung, die z.B. als (Stereo-)Kamera ausgebildet ist, und eine integrierte Beleuchtungsvorrichtung 23 auf, die ausgebildet ist, um das dem jeweiligen Messwertaufnehmer 20 gegenüberliegende zu vermessende Rad zu beleuchten.

Jeder der Messwertaufnehmer 20 kann auch Positionslichter 21 und jeweils einen optischen Sensor 24 aufweisen, um die Position des jeweiligen Messwertaufnehmers 20 in Bezug auf wenigstens zwei andere der Messwertaufnehmer 20 bestimmen zu können.

Die Messwertaufnehmer 20 sind über Datenleitungen 12 mit einer zentralen Auswertvorrichtung 10 verbunden. Alternativ können die Messwertaufnehmer 20 drahtlos mit der zentralen Auswertvorrichtung 10 verbunden sein. Die Auswertvorrichtung 10 kann auch in einem oder mehreren der Messwertaufnehmer 20 angeordnet sein.

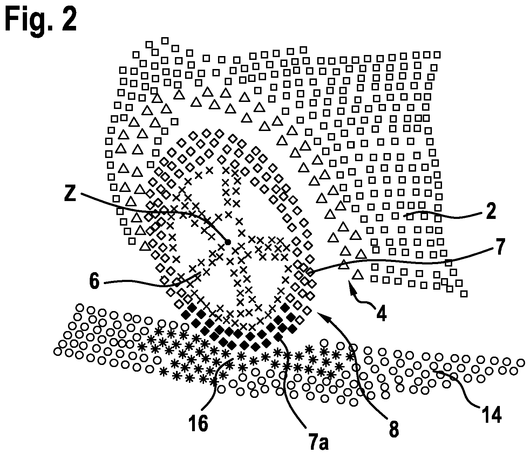

Figur 2 zeigt ein Beispiel für eine 3D-Punktwolke, wie sie von einem Messwertaufnehmer 20 aufgenommen wird, der am linken vorderen Rad 8 eines Fahrzeugs angeordnet ist.

Durch die Kombination intelligenter Bildverarbeitungsalgorithmen wird die Zugehörigkeit der aufgenommenen Punkte zum Rad 8, zur Karosserie 2, z.B. dem Radkasten 4, und zur Fahrbahn 14, 16 bestimmt. Aus den Punkten, die dem Reifen 7 des Rades 8 zugeordnet sind, werden diejenigen Punkte 7a identifiziert, die zum unteren Bereich des Reifens 7 gehören, der aufgrund des Eigengewichtes des Fahrzeugs abgeplattet ist.

Ein mathematisches Modell, insbesondere ein sogenanntes Spline-Modell, wird an die Punkte, die den Reifen 7 repräsentieren und insbesondere an die Punkte 7a des unteren, abgeplatteten Bereichs des Reifens 7 angepasst. Aus den Parametern des mathematischen Modells kann dann die Abplattung des Reifens 7 bestimmt werden.

Dieser Vorgang wird für mindestens zwei Reifen 7 des Fahrzeugs durchgeführt, und die Abplattungen der Reifen 7 werden miteinander verglichen. Überschreiten die Unterschiede des Ausmaßes der Abplattungen zwischen verschiedenen Reifen 7 eines Fahrzeugs einen vorgegebenen Grenzwert, wird ein Warnsignal ausgegeben und/oder eine geplante Fahrzeugvermessung verhindert, da die Fahrzeugvermessung bei Überschreiten des Grenzwertes nicht mehr mit der notwendigen Genauigkeit durchgeführt werden könnte, sondern zu falschen Ergebnissen führen würde.

In einer erweiterten Ausführungsform werden von jedem Rad 8 eines oder mehrere Bilder aufgenommen, während das Fahrzeug auf bzw. über den Messplatz fährt. Aus dem wenigstens einen aufgenommenen Bild kann zusätzlich das Drehzentrum Z jedes Rades 8 bestimmt werden. Ein hierfür geeignetes Verfahren wird beispielsweise in DE 10 2006 048 725 A1 beschrieben.

Im Folgenden kann festgestellt werden, ob sich die Drehzentren Z der Räder 8 während des Auffahrens auf den Messplatz in einer Ebene bewegen, d.h. ob die Ebene des Messplatzes wirklich eben ist. Auch hier wird eine Warnung ausgegeben und/oder die Messung abgebrochen, wenn die Unebenheit des Messplatzes eine vorgegebene Grenze überschreitet, so dass eine fehlerfreie Messung nicht mehr möglich ist.

Die Erfindung ermöglicht es somit, die Voraussetzungen für eine erfolgreiche Fahrzeugvermessung, insbesondere eine horizontale Ausrichtung der Fahrzeugkarosserie, bequem und zuverlässig zu überprüfen.

## Patentansprüche

1. Verfahren zum Überprüfen der korrekten Positionierung eines Fahrzeugs auf einem Messplatz zur Fahrzeugvermessung, **dadurch gekennzeichnet, dass** das Verfahren die Schritte umfasst:
a) Aufnehmen von Bildern von wenigstens zwei Reifen (7) des Fahrzeugs;
b) Identifizieren von Merkmalen in den aufgenommenen Bildern, die wenigstens einen Bereich des jeweils aufgenommenen Reifens (7) beschreiben;
c) Approximieren eines mathematischen Modells an die identifizierten Merkmale;
d) Bestimmen des Ausmaßes der Abplattung jedes Reifens (7) aus dem approximierten mathematischen Modell;
e) Vergleichen des Ausmaßes der Abplattung der wenigstens zwei Reifen (7).

2. Verfahren nach Anspruch 1, das zusätzlich den Schritt aufweist, eine Warnung auszugeben und/oder eine geplante Fahrzeugvermessung zu blockieren, wenn die Differenz in der Abplattung der Reifen (7) einen vorgegebenen Grenzwert überschreitet.

3. Verfahren nach Anspruch 1 oder 2, wobei die Reifen (7) jeweils von einem Projektor (23) beleuchtet werden.

4. Verfahren nach einem der vorangehenden Ansprüche, wobei mit einer Stereo-Kamera (22) Stereo-Bilder der Reifen (7) aufgenommen werden.

5. Verfahren nach einem der vorangehenden Ansprüche, wobei das mathematische Modell ein zwei- oder dreidimensionales mathematisches Modell ist.

6. Verfahren nach einem der vorangehenden Ansprüche, wobei das Verfahren einschließt,
- während einer Vorbeifahrt des Fahrzeugs wenigstens ein Bild jedes Reifen (8) des Fahrzeugs aufzunehmen;
- aus dem mathematischen Modell die Drehzentren (Z) der Räder (8) zu bestimmen; und
- zu überprüfen, ob sich die Drehzentren (Z) der Räder (8) während der Vorbeifahrt in einer Ebene bewegt haben.

7. Vorrichtung zum Überprüfen der korrekten Positionierung eines Fahrzeugs auf einem Messplatz zur Fahrzeugvermessung, mit wenigstens zwei Messwertaufnehmern (20), die jeweils ausgebildet sind, Bilder eines Reifens (7) des Fahrzeugs aufzunehmen,
**dadurch gekennzeichnet, dass** die Vorrichtung eine Auswertvorrichtung (10) aufweist, die ausgebildet ist,
- Merkmale in den aufgenommenen Bildern zu identifizieren, die wenigstens einen Bereich des jeweils aufgenommenen Reifens (7) beschreiben;
- ein mathematisches Modell an die identifizierten Merkmale zu approximieren;
- das Ausmaß der Abplattung jedes Reifens (7) aus dem approximierten mathematischen Modell zu bestimmen; und
- das Ausmaß der Abplattung von wenigstens zwei Reifen (7) miteinander zu vergleichen.

8. Vorrichtung nach Anspruch 6, wobei die Auswertvorrichtung (10) in wenigstens einen der Messwertaufnehmer (20) integriert ist.

9. Vorrichtung nach Anspruch 7 oder 8, wobei die Vorrichtung vier Messwertaufnehmer (20) aufweist.

10. Vorrichtung zur Fahrzeugvermessung, die eine Vorrichtung zum Überprüfen der korrekten Positionierung eines Fahrzeugs nach einem der Ansprüche 7 bis 9 umfasst.

## Claims

1. Method for checking the correct positioning of a vehicle on a measurement site for vehicle measurement, **characterized in that** the method comprises the steps of:
a) recording images of at least two tyres (7) of the vehicle;
b) identifying features in the recorded images that describe at least one region of the respectively recorded tyre (7);
c) approximating a mathematical model to the identified features;
d) determining the extent of the flattening of each tyre (7) from the approximated mathematical model;
e) comparing the extent of the flattening of the at least two tyres (7).

2. Method according to Claim 1, additionally having the step of outputting a warning and/or blocking a planned vehicle measurement if the difference in the flattening of the tyres (7) exceeds a specified limit value.

3. Method according to Claim 1 or 2, wherein the tyres (7) are illuminated in each case by a projector (23).

4. Method according to one of the preceding claims, wherein a stereo camera (22) is used to record stereo images of the tyres (7).

5. Method according to one of the preceding claims, wherein the mathematical model is a two-dimensional or three-dimensional mathematical model.

6. Method according to one of the preceding claims, wherein the method includes
- recording at least one image of each tyre (8) of the vehicle as the vehicle moves past;
- determining from the mathematical model the centres of rotation (Z) of the wheels (8); and
- checking whether the centres of rotation (Z) of the wheels (8) moved in a plane during said passing movement.

7. Apparatus for checking the correct positioning of a vehicle on a measurement site for vehicle measurement, having at least two measurement reading recorders (20), which are in each case configured to record images of a tyre (7) of the vehicle,
**characterized in that** the apparatus has an evaluation apparatus (10), which is configured to
- identify features in the recorded images that describe at least one region of the respectively recorded tyre (7);
- approximate a mathematical model to the identified features;
- determine the extent of the flattening of each tyre (7) from the approximated mathematical model; and
- compare the extent of the flattening of at least two tyres (7) to one another.

8. Apparatus according to Claim 6, wherein the evaluation apparatus (10) is integrated in at least one of the measurement reading recorders (20).

9. Apparatus according to Claim 7 or 8, wherein the apparatus has four measurement reading recorders (20).

10. Apparatus for vehicle measurement, comprising an apparatus for checking the correct positioning of a vehicle according to one of Claims 7 to 9.

## Revendications

1. Procédé de contrôle de positionnement correct d'un véhicule sur un lieu de mesure pour le mesurage de véhicule, **caractérisé en ce que** le procédé comprend les étapes consistant :
a) à capturer des images d'au moins deux pneus (7) du véhicule;
b) à identifier dans les images capturées des caractéristiques qui décrivent au moins une zone du pneu (7) capturé respectif;
c) à approcher un modèle mathématique des caractéristiques identifiées;
d) à déterminer la dimension de l'aplatissement de chaque pneu (7) à partir du modèle mathématique approché;
e) à comparer la dimension de l'aplatissement des aux moins deux pneus (7).

2. Procédé selon la revendication 1, dont une étape supplémentaire consiste à émettre un avertissement et/ou à bloquer un mesurage de véhicule planifié si la différence d'aplatissement entre les pneus (7) dépasse une valeur limite prédéfinie.

3. Procédé selon la revendication 1 ou 2, les pneus (7) étant respectivement éclairés par un projecteur (23).

4. Procédé selon l'une quelconque des revendications précédentes, des images stéréoscopiques des pneus (7) étant capturées avec une caméra stéréoscopique (22).

5. Procédé selon l'une quelconque des revendications précédentes, le modèle mathématique étant un modèle mathématique bidimensionnel ou tridimensionnel.

6. Procédé selon l'une quelconque des revendications précédentes, le procédé consistant
- à capturer au moins une image de chaque pneu (8) du véhicule pendant un passage du véhicule;
- à déterminer les centres de rotation (Z) des roues (8) à partir du modèle mathématique; et
- à contrôler si les centres de rotation (Z) des roues (8) se sont déplacés dans un plan pendant le passage.

7. Dispositif de contrôle de positionnement correct d'un véhicule sur un lieu de mesure pour le mesurage de véhicule, pourvu d'au moins deux capteurs (20) de mesure qui servent respectivement à capturer des images d'un pneu (7) du véhicule, **caractérisé en ce que** le dispositif comporte un dispositif d'évaluation (10) qui sert
- à identifier dans les images capturées des caractéristiques qui décrivent au moins une zone du pneu (7) capturé respectif;
- à approcher un modèle mathématique des caractéristiques identifiées;
- à déterminer la dimension de l'aplatissement de chaque pneu (7) à partir du modèle mathématique approché; et
- à comparer la dimension de l'aplatissement d'au moins deux pneus (7) l'un par rapport à l'autre.

8. Dispositif selon la revendication 6, le dispositif d'évaluation (10) étant intégré à au moins un des capteurs (20) de mesure.

9. Dispositif selon la revendication 7 ou 8, le dispositif comportant quatre capteurs (20) de mesure.

10. Dispositif de mesurage de véhicule qui comporte un dispositif de contrôle du positionnement correct d'un véhicule selon l'une quelconque des revendications 7 à 9.
